# EUROPÄISCHE PATENTSCHRIFT

(11) **EP 2 828 122 B1**
(45) Veröffentlichungstag und Bekanntmachung des Hinweises auf die Patenterteilung: **18.07.2018**
(21) Anmeldenummer: 13711671.1
(22) Anmeldetag: 21.03.2013
(51) Int. Cl.: B60N 2/80, B60N 2/812, B60N 2/818, B60N 2/42

(54) **VERRIEGELUNGSVORRICHTUNG FÜR EINE KOPFSTÜTZE**
LOCKING DEVICE FOR A HEADREST
DISPOSITIF DE VERROUILLAGE POUR UN APPUIE-TÊTE

(30) Priorität: 22.03.2012 DE 102012005626; 28.06.2012 DE 102012012867
(43) Veröffentlichungstag der Anmeldung: 28.01.2015
(73) Patentinhaber: Adient Luxembourg Holding S.à r.l., 1855 Luxembourg (LU)
(72) Erfinder: MARTIN, Patrick, Braintree Essex CM77 8QQ (GB); HOWELLS, Richard Johnathan, Danbury Essex CM3 4DZ (GB); JAKUBEC, Ivan, 91701 Trnava (SK)
(74) Vertreter: Loock, Jan Pieter
(86) Internationale Anmeldenummer: PCT/EP2013/055919
(87) Internationale Veröffentlichungsnummer: WO 2013/139902

(56) Entgegenhaltungen:
- EP-A1- 0 582 765
- DE-A1-102005 012 896
- DE-A1-102008 064 462

## Beschreibung

### Stand der Technik

Die Erfindung betrifft eine Verriegelungsvorrichtung für eine Kopfstütze, wobei die Verriegelungsvorrichtung ein Sperrelement aufweist, welches zum Eingriff mit einer Ausnehmung in einer Kopfstützenstange der Kopfstütze vorgesehen ist.

Solche Verriegelungsvorrichtungen sind, beispielsweise aus den Druckschriften DE 10 2005 012 896 A1 und DE 10 2008 064 462 A1, allgemein bekannt. Häufig weisen Kopfstützen zwei Kopfstützenstangen auf, welche sich parallel von einem Kopfanlagepolster in Richtung einer Rückenlehne erstrecken und in entsprechenden Führungshülsen der Rückenlehne höhenverstellbar gehalten werden. Zur Fixierung der Kopfstütze in einer gewünschten Höhe ist wenigstens eine Kopfstützenstange mit Ausnehmungen versehen, in welche ein Sperrelement der Führungshülse formschlüssig eingreifen kann. Das Sperrelement ist federelastisch in Richtung der Ausnehmung vorgespannt. Der Benutzer kann das Sperrelement mittels eines Betätigungselements entgegen der Federkraft außer Eingriff mit der Ausnehmung bringen, um die Verriegelungsvorrichtung zu entriegeln und eine Höhenverstellung der Kopfstütze vornehmen zu können. In der gewünschten Position kann der Benutzer das Betätigungselement wieder loslassen, so dass das Sperrelement in eine entsprechende Ausnehmung einrastet und die Verriegelungsvorrichtung wieder verriegelt ist.

Nachteilig an solchen aus dem Stand der Technik bekannten Verriegelungsvorrichtungen ist, dass bei einem Verdrehen der Kopfstützenstangen gegenüber den Führungshülsen ein ungewolltes Entriegeln der Verriegelungsvorrichtung vorkommen kann. Insbesondere im Falle eines Unfalls können hohe Beschleunigungskräfte auftreten, wodurch ein solches Verdrehen auftreten kann. Wenn die Kopfstützenstangen entriegelt sind, ist die Kopfstütze freibeweglich und kann sogar gänzlich aus den Führungshülsen herausgeschoben werden. Hierdurch geht eine erhebliche Verletzungsgefahr für den auf dem Fahrzeugsitz sitzenden Fahrzeuginsassen aus.

### Offenbarung der Erfindung

Es ist die Aufgabe der vorliegenden Erfindung, eine Verriegelungsvorrichtung für eine Kopfstütze bereitzustellen, bei welcher eine versehentliche Entriegelung aufgrund von relativen Drehbewegungen zwischen einer Kopfstützenstange und einer Führungshülse verhindert wird.

Diese Aufgabe wird mit einer Verriegelungsvorrichtung gemäss Anspruch 1 gelöst. In vorteilhafter Weise ist das Sperrelement bei einer relativen Drehbewegung zwischen der Führungshülse und der Kopfstützenstange in der Lage, sich mit der Kopfstützenstange zumindest teilweise mitzudrehen, da das Sperrelement um die Drehachse drehbar gelagert ist. Die gemeinsame Drehung von Kopfstützenstange und Sperrelement hat zur Folge, dass die Lage des Sperrelements in der Ausnehmung der Kopfstützenstange nicht oder zumindest deutlich weniger verändert wird und somit keine Entriegelung der Verriegelungsvorrichtung erfolgt. Mit anderen Worten: Das Sperrelement ist derart in der Führungshülse gelagert, dass das Sperrelement eine Kompensationsdrehung gegenüber der Führungshülse durchführen kann, so dass eine Drehung der Kopfstützenstange zumindest teilweise kompensiert wird.

Gemäß einer bevorzugten Ausführungsform der vorliegenden Erfindung ist das Sperrelement um einen Winkel zwischen 5 und 40 Grad, bevorzugt zwischen 10 und 20 Grad und besonders bevorzugt von im Wesentlichen 15 Grad, gegenüber der Führungshülse um die Drehachse verdrehbar gelagert.

Gemäß der vorliegenden Erfindung ist vorgesehen, dass das Sperrelement einen Sperrriegel und ein Betätigungselement umfasst, wobei das Betätigungselement ein Außensegment und ein Innensegment umfasst, welche starr miteinander verbunden sind. Das Außensegment ist vorzugsweise mit abgerundeten Kanten und/oder halbkreisförmig ausgebildet. Das Innensegment umschließt insbesondere die Kopfstützenstange und weist auf einer dem Außensegment abgewandten Seite den Sperrriegel auf. Zur Betätigung ist das Betätigungselement entlang einer Hauptbewegungsrichtung bewegbar, welche sich in einer zur axialen Richtung der Kopfstützenstange senkrechten Ebene erstreckt. Das Innensegment und das Außensegment sind vorzugsweise über zwei sich parallel zur Hauptbewegungsrichtung erstreckende Stege starr miteinander gekoppelt.

Gemäß der vorliegenden Erfindung ist vorgesehen, dass die Führungshülse zwei sich parallel zur Hauptbewegungsrichtung erstreckende Führungskanäle aufweist, in welchen freie Schenkel des Außensegments verschiebbar geführt sind. Die Schenkel weisen eine Krümmung und/oder abgerundete Kanten auf, so dass vorteilhafterweise eine Führung des Betätigungselements parallel zur Hauptbewegungsrichtung erzielt wird und gleichzeitig eine Drehung des Betätigungselements relativ zur Führungshülse um die Drehachse, beispielsweise im Falle eines Unfalls, ermöglicht wird. Auf einer dem Außensegment abgewandten Seite des Betätigungselements ist insbesondere ein Federmittel angeordnet, welches das Sperrelement in die Verriegelungsposition vorspannt.

Weitere Einzelheiten, Merkmale und Vorteile der Erfindung ergeben sich aus den Zeichnungen sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Figuren

- **Figur 1**: zeigt eine schematische Perspektivansicht einer Verriegelungsvorrichtung gemäß einer beispielhaften Ausführungsform der Erfindung.
- **Figur 2**: zeigt eine schematische Schnittbildansicht der Verriegelungsvorrichtung gemäß der beispielhaften Ausführungsform der Erfindung.
- **Figuren 3 und 4**: zeigen schematische Perspektivansichten der Verriegelungsvorrichtung gemäß der beispielhaften Ausführungsform der Erfindung, auf welche ein Drehmoment wirkt.

### Ausführungsformen der Erfindung

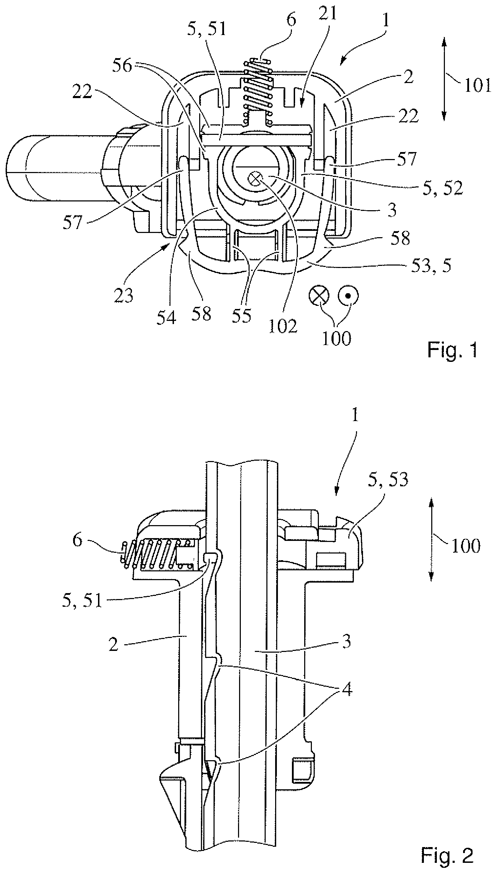

In **Figuren 1 und 2** sind schematische Ansichten einer Verriegelungsvorrichtung 1 für eine Kopfstütze (nicht dargestellt) gemäß einer beispielhaften Ausführungsform dargestellt. Die Verriegelungsvorrichtung 1 weist eine Führungshülse 2 auf, in welcher eine Kopfstützenstange 3 zur Halterung eines Kopfanlageteils (nicht dargestellt) befestigt ist. Die Kopfstützenstange 3 umfasst ein Rohr oder einen Vollmaterialzylinder, auf dessen äußerer Mantelfläche keilförmige Ausnehmungen 4 in gleichmäßigen Abständen entlang der axialen Richtung 100 der Kopfstützenstange 3 eingebracht sind.

Die Kopfstützenstange 3 ist in der Führungshülse 2 in axialer Richtung 100 verschiebbar gelagert. Die Führungshülse 2 ist vorzugsweise in die Oberseite einer Rückenlehne eines Fahrzeugsitzes eingelassen (nicht dargestellt). Die Verriegelungsvorrichtung 1 weist ein Sperrelement 5 auf, welches entlang einer zur axialen Richtung 100 senkrechten Querrichtung 101 gegenüber der Führungshülse 2 verschiebbar gelagert ist. Das Sperrelement 5 umfasst einen Sperrriegel 51 und ein Betätigungselement 52. Das Sperrelement 5 ist entlang der Querrichtung 101 zwischen einer Verriegelungsposition (siehe Figuren 1 und 2), in welcher der Sperrriegel 51 mit einer der Ausnehmungen 4 in Eingriff ist, und einer Entriegelungsposition (nicht dargestellt), in welcher der Sperrriegel 51 außer Eingriff mit den Ausnehmungen 4 ist, bewegbar. In der Verriegelungsposition wird eine Bewegung der Kopfstützenstange 3 in axialer Richtung 100 unterbunden, während in der Entriegelungsposition die Kopfstützenstange 3 in axialer Richtung 100, beispielsweise zur Höhenverstellung der Kopfstütze des Fahrzeugsitzes, verschiebbar ist. Das Sperrelement 5 wird mittels eines Federelements 6 in Richtung der Verriegelungsposition federelastisch vorgespannt. Durch eine manuelle Betätigung des Betätigungselements 52 entlang der Querrichtung 101 wird der Sperrriegel 51 von der Verriegelungsposition in die Entriegelungsposition bewegt.

Das Betätigungselement 52 umfasst ein Außensegment 53 und ein Innensegment 54, die über zwei sich parallel zur Querrichtung 101 erstreckende Stege 55 starr miteinander gekoppelt sind. Das Innensegment 54 umschließt die Kopfstützenstange 3 in einer zur axialen Richtung 100 senkrechten Ebene. Der Sperrriegel 51 ist auf einer dem Außensegment 53 abgewandten Seite des Innensegments 54 angeordnet und erstreckt sich sowohl senkrecht zur axialen Richtung 100 als auch senkrecht zur Querrichtung 101. Ein Führungsbereich 56 des Innensegments ist zusammen mit dem Sperrriegel 51 in einer Führungsaufnahme 21 der Führungshülse 2 in Querrichtung 101 verschiebbar geführt. Das Außensegment 53 ist halbkreisförmig ausgebildet und weist zwei sich entlang der Querrichtung 101 in die Führungshülse 2 erstreckende Schenkel 57 auf. Die Schenkel 57 sind in sich in Querrichtung 101 erstreckenden Führungskanälen 22 der Führungshülse 2 geführt. Die Schenkel 57 weisen eine Krümmung und abgerundete Kanten auf, so dass sich das Betätigungselement 52 um eine zur axialen Richtung 100 parallele Drehachse 102 gegenüber der Führungshülse 2 drehen kann. Hierfür sind ferner Begrenzungskanten 58 des Betätigungselements 52 von den Einführkanten 23 der Führungshülse 2 beabstandet ausgebildet. Die Kanten des Betätigungselements 52 sind ferner allesamt abgerundet.

Wenn sich die Kopfstützenstange 3, beispielsweise aufgrund von unfallbedingten Beschleunigungskräften, gegenüber der Rückenlehne des Fahrzeugsitzes dreht, kann sich das Betätigungselement 52 und somit auch der Sperrriegel 51 über einen gewissen Winkelbereich mitbewegen, so dass eine ungewünschte Entriegelung der Verriegelungsvorrichtung durch ein Herausrutschen des Sperrriegels 51 aus der Ausnehmung 4 verhindert wird. Der Sperrriegel 51 kann vielmehr in der Ausnehmung der sich drehenden Kopfstützenstange 3 angeordnet bleiben und fixiert somit die Kopfstützenstange 3. Das Sperrelement 5 ist insbesondere im Wesentlichen um 15 Grad gegenüber der Führungshülse 2 um die Drehachse 102 verdrehbar gelagert. Die Drehachse 102 verläuft insbesondere mittig und in axialer Richtung 100 durch die Kopfstützenstange 3.

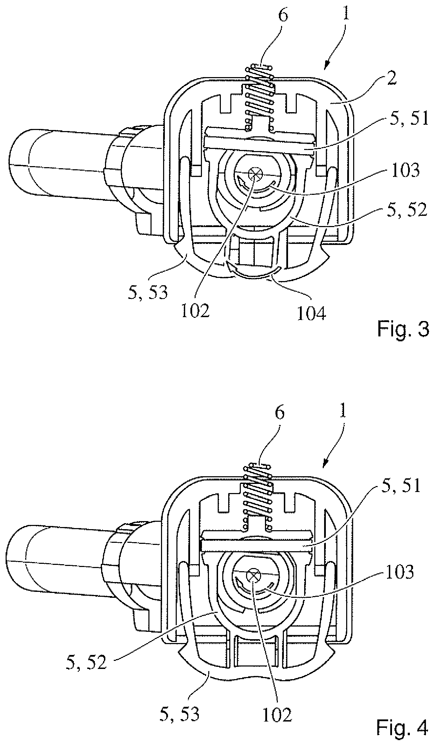

In **Figuren 3 und 4** ist die anhand von Figuren 1 und 2 beschriebene Verriegelungsvorrichtung 1 in einer Situation dargestellt, in der ein Drehmoment 103 auf die Kopfstützenstange 3 wirkt (Figur 4). Aus Figur 4 ist zu erkennen, dass sich das Sperrelement 5 mit der sich drehenden Kopfstützenstange 3 zumindest teilweise mitbewegt, so dass eine Drehung 104 des Sperrelements 5 gegenüber der Führungshülse 2 um die Drehachse 102 erfolgt. Das Sperrelement 5 ist also derart in der Führungshülse 2 gelagert, dass das Sperrelement 5 eine Kompensationsdrehung gegenüber der Führungshülse 2 durchführen kann, so dass eine Drehung der Kopfstützenstange 3 um die Drehachse 102 zumindest teilweise kompensiert werden kann.

### Bezugszeichenliste

- 1: Verriegelungsvorrichtung
- 2: Führungshülse
- 3: Kopfstützenstange
- 4: Ausnehmung
- 5: Sperrelement
- 6: Federelement
- 51: Sperrriegel
- 52: Betätigungselement
- 53: Außensegment
- 54: Innensegment
- 55: Steg
- 56: Führungsbereich
- 57: Schenkel
- 58: Begrenzungskante
- 21: Führungsaufnahme
- 22: Führungskanäle
- 23: Einführkante
- 100: axiale Richtung
- 101: Querrichtung
- 102: Drehachse
- 103: Drehmoment
- 104: Drehung

## Patentansprüche

1. Verriegelungsvorrichtung (1) für eine Kopfstütze aufweisend eine Kopfstützenstange (3), eine Führungshülse (2) für die Kopfstützenstange (3) und ein Sperrelement (5), wobei das Sperrelement (5) relativ zur Führungshülse (2) zwischen einer Verriegelungsposition, in welcher das Sperrelement (5) mit einer Ausnehmung (4) in der Kopfstützenstange (3) in Eingriff ist, und einer Entriegelungsposition, in welcher das Sperrelement (5) außer Eingriff mit Ausnehmungen (4) in der Kopfstützenstange (3) ist, bewegbar ist, wobei das Sperrelement (5) gegenüber der Führungshülse (2) um eine zur Kopfstützenstange (3) parallele Drehachse (102) verschwenkbar ist, wobei das Sperrelement (5) derart in der Führungshülse (2) gelagert ist, dass sich das Sperrelement (5) bei einer relativen Drehbewegung zwischen der Führungshülse (2) und der Kopfstützenstange (3) zumindest teilweise gemeinsam mit der Kopfstützenstange (3) um die Drehachse (102) dreht, **dadurch gekennzeichnet, dass** das Sperrelement (5) einen Sperrriegel (51) und ein Betätigungselement (52) umfasst, wobei das Betätigungselement (52) ein Außensegment (53) und ein Innensegment (54) umfasst, welche insbesondere starr miteinander verbunden sind, wobei die Führungshülse (2) zwei sich parallel zur Hauptbewegungsrichtung erstreckende Führungskanäle (22) aufweist, in welchen freie Schenkel (57) des Außensegments (53) verschiebbar geführt sind.

2. Verriegelungsvorrichtung (1) nach Anspruch 1, wobei das Sperrelement (5) um einen Winkel zwischen 5 und 40 Grad, bevorzugt zwischen 10 und 20 Grad und besonders bevorzugt von im Wesentlichen 15 Grad gegenüber der Führungshülse (2) um die Drehachse (102) drehbar gelagert ist.

3. Verriegelungsvorrichtung (1) nach einem der vorhergehenden Ansprüche, wobei das Außensegment (53) mit abgerundeten Kanten versehen ist und/oder halbkreisförmig ausgebildet ist.

4. Verriegelungsvorrichtung (1) nach einem der vorhergehenden Ansprüche, wobei das Innensegment (54) die Kopfstützenstange (3) umschließt und auf einer dem Außensegment (53) abgewandten Seite den Sperrriegel (51) aufweist.

5. Verriegelungsvorrichtung (1) nach einem der vorhergehenden Ansprüche, wobei das Betätigungselement (52) entlang einer Hauptbewegungsrichtung bewegbar ist, welche sich in einer zur axialen Richtung (100) der Kopfstützenstange (3) senkrechten Ebene erstreckt.

6. Verriegelungsvorrichtung (1) nach einem der vorhergehenden Ansprüche, wobei das Innensegment (54) und das Außensegment (53) über zwei sich parallel zur Hauptbewegungsrichtung erstreckende Stege (55) starr miteinander gekoppelt sind.

7. Verriegelungsvorrichtung (1) nach einem der vorhergehenden Ansprüche, wobei die freien Schenkel (57) eine Krümmung und/oder abgerundete Kanten aufweisen.

8. Verriegelungsvorrichtung (1) nach einem der vorhergehenden Ansprüche, wobei auf einer dem Außensegment (53) abgewandten Seite des Betätigungselements (52) ein Federmittel (6) angeordnet ist, welches das Sperrelement (5) in die Verriegelungsposition vorspannt.

## Claims

1. Locking device (1) for a headrest, having a headrest rod (3), a guide sleeve (2) for the headrest rod (3), and a blocking element (5), wherein the blocking element (5) is movable relative to the guide sleeve (2) between a locking position, in which the blocking element (5) is in engagement with a recess (4) in the headrest rod (3), and an unlocking position, in which the blocking element (5) is disengaged from recesses (4) in the headrest rod (3), wherein the blocking element (5) is pivotable in relation to the guide sleeve (2) about an axis of rotation (102) parallel to the headrest rod (3), wherein the blocking element (5) is mounted in the guide sleeve (2) in such a manner that, during a relative rotational movement between the guide sleeve (2) and the headrest rod (3), the blocking element (5) at least partially rotates together with the headrest rod (3) about the axis of rotation (102), **characterized in that** the blocking element (5) comprises a blocking bolt (51) and an actuating element (52), wherein the actuating element (52) comprises an outer segment (53) and an inner segment (54), which are in particular connected rigidly to each other, wherein the guide sleeve (2) has two guide channels (22) which extend parallel to the main direction of movement and in which free limbs (57) of the outer segment (53) are displaceably guided.

2. Locking device (1) according to claim 1, wherein the blocking element (5) is mounted rotatably about the axis of rotation (102) by an angle of between 5 and 40 degrees, preferably between 10 and 20 degrees and particularly preferably of essentially 15 degrees in relation to the guide sleeve (2).

3. Locking device (1) according to either of the preceding claims, wherein the outer segment (53) is provided with rounded edges and/or is of semi-circular design.

4. Locking device (1) according to one of the preceding claims, wherein the inner segment (54) surrounds the headrest rod (3) and has the blocking bolt (51) on a side facing away from the outer segment (53) .

5. Locking device (1) according to one of the preceding claims, wherein the actuating element (52) is movable along a main direction of movement which extends in a plane perpendicular to the axial direction (100) of the headrest rod (3).

6. Locking device (1) according to one of the preceding claims, wherein the inner segment (54) and the outer segment (53) are coupled rigidly to each other via two webs (55) extending parallel to the main direction of movement.

7. Locking device (1) according to one of the preceding claims, wherein the free limbs (57) have a curvature and/or rounded edges.

8. Locking device (1) according to one of the preceding claims, wherein a spring means (6) which pretensions the blocking element (5) into the locking position is arranged on a side of the actuating element (52) that faces away from the outer segment (53).

## Revendications

1. Dispositif de verrouillage (1) pour un appuie-tête présentant une tige d'appuie-tête (3), un fourreau de guidage (2) pour la tige d'appuie-tête (3) et un élément d'arrêt (5), dans lequel l'élément d'arrêt (5) peut être déplacé par rapport au fourreau de guidage (2) entre une position de verrouillage, dans laquelle l'élément d'arrêt (5) est en prise avec un cran (4) dans la tige d'appuie-tête (3), et une position de déverrouillage, dans laquelle l'élément d'arrêt (5) est hors de prise avec des crans (4) dans la tige d'appuie-tête (3), dans lequel l'élément d'arrêt (5) peut pivoter par rapport au fourreau de guidage (2) autour d'un axe de rotation (102) parallèle à la tige d'appuie-tête (3), dans lequel l'élément d'arrêt (5) est monté dans le fourreau de guidage (2) de telle manière que l'élément d'arrêt (5) tourne autour de l'axe de rotation (102) au moins en partie de concert avec la tige d'appuie-tête (3) lors d'un mouvement de rotation relatif entre le fourreau de guidage (2) et la tige d'appuie-tête (3), **caractérisé en ce que** l'élément d'arrêt (5) comprend un verrou de blocage (51) et un élément d'actionnement (52), dans lequel l'élément d'actionnement (52) comprend un segment extérieur (53) et un segment intérieur (54), qui sont assemblés l'un à l'autre en particulier de façon rigide, dans lequel le fourreau de guidage (2) présente deux canaux de guidage (22) s'étendant parallèlement à la direction de mouvement principale, dans lesquels des branches libres (57) du segment extérieur (53) sont guidées de façon coulissante.

2. Dispositif de verrouillage (1) selon la revendication 1, dans lequel l'élément d'arrêt (5) est monté de façon rotative autour de l'axe de rotation (102) d'un angle compris entre 5 et 40 degrés, de préférence entre 10 et 20 degrés, et de préférence encore essentiellement de 15 degrés par rapport au fourreau de guidage (2).

3. Dispositif de verrouillage (1) selon l'une quelconque des revendications précédentes, dans lequel le segment extérieur (53) est doté de bords arrondis et/ou est réalisé en forme de demi-cercle.

4. Dispositif de verrouillage (1) selon l'une quelconque des revendications précédentes, dans lequel le segment intérieur (54) entoure la tige d'appuie-tête (3) et présente le verrou de blocage (51) sur un côté détourné du segment extérieur (53).

5. Dispositif de verrouillage (1) selon l'une quelconque des revendications précédentes, dans lequel l'élément d'actionnement (52) peut être déplacé le long d'une direction de mouvement principale, qui s'étend dans un plan perpendiculaire à la direction axiale (100) de la tige d'appuie-tête (3).

6. Dispositif de verrouillage (1) selon l'une quelconque des revendications précédentes, dans lequel le segment intérieur (54) et le segment extérieur (53) sont couplés l'un à l'autre de façon rigide par l'intermédiaire de deux nervures (55) qui s'étendent parallèlement à la direction de mouvement principale.

7. Dispositif de verrouillage (1) selon l'une quelconque des revendications précédentes, dans lequel les branches libres (57) présentent une courbure et/ou des bords arrondis.

8. Dispositif de verrouillage (1) selon l'une quelconque des revendications précédentes, dans lequel un moyen de ressort (6), qui précontraint l'élément d'arrêt (5) dans la position de verrouillage, est disposé sur un côté de l'élément d'actionnement (52) détourné du segment extérieur (53).
